# EUROPÄISCHE PATENTANMELDUNG

(11) **EP 0 765 092 A2**
(43) Veröffentlichungstag der Anmeldung: **26.03.1997**
(21) Anmeldenummer: 96111041.8
(22) Anmeldetag: 09.07.1996
(51) Int. Cl.: H04Q 3/545

(54) **Verfahren zur Steuerung einer Telekommunikationsanlage**

(30) Priorität: 28.07.1995 DE 19527812
(71) Anmelder: SIEMENS AKTIENGESELLSCHAFT, 80333 München (DE)
(72) Erfinder: Neuhaus, Ralf, 44534 Lünen (DE); Riesenbeck, Dirk, 59073 Hamm (DE)

(57) **Zusammenfassung**

Eine Telekommunikationsanlage wird mit Hilfe eines Computers gesteuert, indem Eingaben eines Anwenders durch eine Software in Steuerbefehle der Telekommunikationsanlage umgesetzt werden, wobei eine standardisierte Programmierschnittstelle für Telefonieapplikationen berücksichtigt wird.

## Beschreibung

Telekommunikationsanlagen können vielfach durch die Eingabe von Kennziffernfolgen von den an sie angeschlossener Endgeräten aus gesteuert werden. Wegen des komplexen Funktionsumfangs und der vielfältigen Leistungsmerkmale moderner Telekommunikationsanlagen ist die Steuerung über die Eingabe von Kennziffernfolgen mit Hilfe von Telefonen jedoch häufig nicht sehr komfortabel, weil der Anwender schnell die Übersicht über die eingegebenen Befehle und den Zustand der Telekommunikationsanlage verliert. Daher gewinnt die viel komfortablere Steuerung von Telekommunikationsanlagen über daran angeschlossene Datenverarbeitungssysteme wie z.B. Personal Computer ständig an Bedeutung. Hierbei gewinnen wiederum grafische Benutzeroberflächen und für diese Benutzeroberflächen und die damit zusammenhängenden Betriebssysteme entwickelte Telefonieapplikationen wegen des mit ihnen verbundenen Benutzerkomforts zunehmend an Bedeutung.

Zur Zeit werden standardisierte Programmierschnittstellen (z.B. TAPI, Telephony Application Programming Interface) entwickelt, die einen definierten Befehlsumfang bieten, der von Softwareanbietern zur Programmierung hardwareunabhängiger Telefonieapplikationen benutzt werden kann. Die vorherrschende Soft- und Hardwareumgebung sorgt für die Übermittlung der von der Programmierschnittstelle übergebenen Befehle z.B. an ein angeschlossenes Vermittlungssystem (Telekommunikationsanlage). Die Daten werden beispielsweise in Form von codierten D-Kanal-Meldungen über ISDN übertragen und im Vermittlungssystem decodiert und entsprechend weiterverarbeitet. Hierfür ist neben einem systemspezifischen Treiber auf der PC-Seite im Vermittlungssystem eine entsprechende Software notwendig, die die Telefoniefunktionen auf die systemspezifischen internen Funktionen und Prozesse abbildet.

Hierbei unterscheidet man zwischen sog. First-Pary-Diensten und Third-Party-Diensten. Baut beispielsweise ein PC nur für sich selbst oder auch für ein an diesen PC angeschlossenes Telefon Verbindungen auf oder aktiviert dieser PC für sich oder für das an ihn angeschlossene Telefon Leistungsmerkmale einer Telekommunikationsanlage, so handelt es sich um sog. First-Party-Dienste, d.h. es werden nur Aktionen für das eigene Telefon ausgeführt, das auch physikalisch über dieselbe Schnittstelle an die Telekommunikationsanlage angeschlossen ist wie der PC. Sollen jedoch von einem angeschlossenen PC Dienste für einen physikalisch anderen Teilnehmer der Telekommunikationsanlage (z.B. auch für das "eigene", neben dem PC stehende, aber nicht über ihn an die Telekommunikationsanlage angeschlossene Telefon) ausgeführt werden, so handelt es sich bei solchen Funktionen um sog. Third-Party-Dienste.

Bei den zuletzt genannten Diensten ist es u.U. schwierig, Mißbrauch durch kundige PC-Anwender zu verhindern. Die Zuteilung eines PCs zu einem an einem anderen Port der Telekommunikationsanlage angeschlossenen Telefon wird auf der PC-Seite festgelegt und ist dadurch manipulierbar. Dies ermöglicht je nach verwendeter Applikation z.B. das Schalten oder Trennen von Verbindungen für dritte Teilnehmer oder das Einleiten von Leistungsmerkmalen für andere Teilnehmer (z.B. Anrufschutz). Gefahren birgt auch das u.U. hohe zusätzliche Verkehrsaufkommen im Signalisierungs-Kanal zwischen PC und Telekommunikationsanlage.

Der Erfindung liegt die Aufgabe zugrunde, ein Verfahren zur Steuerung einer Telekommunikationsanlage mit Hilfe eines an diese Telekommunikationsanlage angeschlossenen Datenverarbeitungssystems anzugeben, welches die in Telekommunikationsanlagen vorhandenen Resourcen in möglichst effizienter Weise nutzt und die Implementierung bzw. Nutzung von Telefonieanwendungen mit minimalem Aufwand seitens der Telekommunikationsanlage ermöglicht. Diese Aufgabe wird mit Hilfe eines Verfahrens gemäß Anspruch 1 gelöst.

Bei diesem Verfahren werden Eingaben eines Anwenders des Datenverarbeitungssystems durch eine auf dem Datenverarbeitungssystem laufende Software in Steuerbefehle der Telekommunikationsanlage umgesetzt und an die Telekommunikationsanlage gesandt. Das erfindungsgemäße Verfahren ist dadurch gekennzeichnet, daß die Eingaben des Anwenders zunächst von einer Anwender-Software in Befehle einer standardisierten Programmierschnittstelle und diese daraufhin mit Hilfe einer für die Telekommunikationsanlage spezifischen Treibersoftware in Steuerbefehle der Telekommunikationsanlage umgesetzt werden. Bei Systemumstellungen in der Telekommunikationsanlage oder bei einem Wechsel der verwendeten Schnittstelle zur Steuerung der Telekommunikationsanlage wird daher nur die Änderung der Treibersoftware nötig. Es kann ferner jede Anwendersoftware verwendet werden, welche die standardisierte Programmierschnittstelle unterstützt.

Vorteilhafte Weiterbildungen der Erfindung sind Gegenstand von untergeordneten Patentansprüchen.

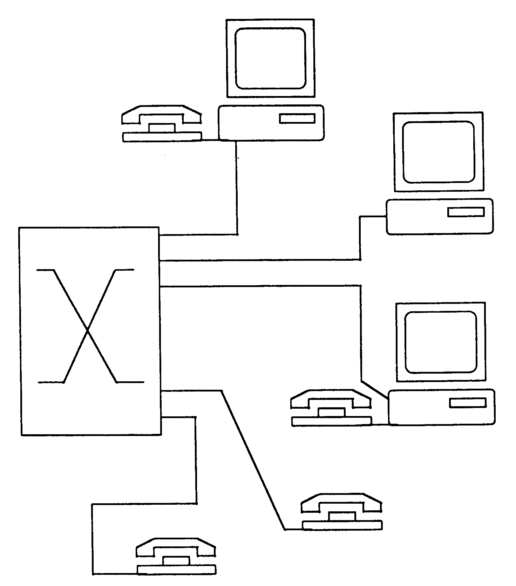

- FIG 1: zeigt eine zypische Konfiguration einer Telekommunikationsanlage mit Endgeräten, von denen einige Telefone und andere Personal Computer sind.

Im folgenden wird die Erfindung anhand bevorzugter Ausführungsbeispiele und mit Hilfe der Figur näher beschrieben.

In Vermittlungssystemen sind System-Leistungsmerkmale in der Regel über Kennzahlprozeduren aktivierbar. Durch eine Umsetzung der von der Telefonie-Schnittstelle benutzten Funktionen in geeignete systemspezifische Kennziffern können somit auch aus einer Telefonie-Anwendung heraus Systemleistungsmerkmale für das eigene Gerät, d.h. den PC bzw. das zugehörige Telefon aktiviert werden. Das Telefon kann z.B. an eine PC-ISDN-Karte angeschlossen sein, oder der PC ist über ein Modem an die analoge Telefonleitung angeschlossen. Die Erfindung würde in diesem Fall mit Hilfe einer systemspezifischen Treibersoftware auf der PC-Seite realisiert werden, deren Aufgabe in diesem einfachen Fall nur darin bestehen würde, die Telefonie-Befehle geeignet umzusetzen und über das benutzte Transportmedium (z.B. ISDN, V.24, Modem) als Ziffernfolge bzw. Wahlinformation übertragen. Auf der Systemseite (Telekommunikationsanlage) ist dabei keine Veränderung notwendig, sofern als Anschlüsse die vorhandenen Teilnehmerschnittstellen (a/b, S0 oder U-Schnittstellen) verwendet werden.

Bei einer eventuellen Änderung der Software des Systems braucht lediglich die "Umsetztabelle" in der Treibersoftware auf dem PC erweitert oder geändert zu werden, um neue oder geänderte Funktionen zu berücksichtigen.

FIG 1 zeigt eine Telekommunikationsanlage, die den angeschlossenen Endgeräten analoge oder digitale Schnittstellen zur Verfügung stellt. An diese Telekommunikationsanlage sind im allgemeinen eine Vielzahl von Telefonen und verschiedene Personalcomputer und andere Endgeräte angeschlossen. Einige der Telefone sind zunächst an einen PC angeschlossen und über diesen über die Telekommunikationsanlage angeschlossen. Andere Telefone sind zwar direkt an die Telekommunikationsanlage angeschlossen, werden aber von einem Anwender benutzt, der einen der angeschlossenen PCs benutzt und sind deshalb in diesem Sinne dem PC (eigentlich dem Anwender des PCs) zugeordnet. Möglicherweise ist einer der PCs eine zentrale Vermittlungsstelle. Jedes Endgerät hat eine Teilnehmernummer, welches bei Anwahl der Telekommunikationsanlage dieser mitteilt, von welchem Endgerät aus die Anwahl durchgeführt wurde.

In vielen Telekommunikationsanlagen kann eine über eine Kennziffer zu aktivierende Prozedur implementiert werden, die es ermöglicht, eine Wahl für einen anderen Systemteilnehmer durchzuführen, was bereits einer einfachen Third-Party-Anwendung entspricht. In vielen handelsüblichen Telekommunikationsanlagen sind derartige Prozeduren bereits verfügbar. Gemäß der vorliegenden Erfindung ist vorgesehen, eine neue bzw. erweiterte Prozedur für das Leistungsmerkmal Third-Party-Dienste zu implementieren, welche es auf einfache Weise ermöglicht, viele der in Telefonieapplikationen (z.B. auf TAPI-Basis) realierten Funktionen ohne großen Aufwand in der Telekommunikationsanlage zur Verfügung zu stellen. Die erfindungsgemäße neue bzw. veränderte Prozedur wird dazu vorzugsweise über eine Kennziffer von einer beliebigen Endeinrichtung aktiviert, wobei diese Endeinrichtung (Endgerät) über eine digitale oder analoge (S0, a/b, U) Schnittstellen angeschlossen sein kann. Nach der Eingabe dieser Kennziffer wird anhand der Rufnummer des aktivierenden Endgerätes (z.B. ein PC mit der internen Rufnummer 70) in einer systeminternen Zuordnungstabelle nach einem Eintrag für diese Rufnummer gesucht. Der Aufbau der Tabelle entspricht dabei im einfachsten Fall beispielsweise folgendem Schema, wobei die Endeinrichtungen PC und Telefon als eine der möglichen Kombinationen zu sehen sind:

**Tabelle 1**

| PC | Telefon |
|---|---|
| 68 | 11 |
| 70 | 15 |
| ... | ... |

Wird kein Eintrag in der Tabelle gefunden, so werden weitere Ziffern verworfen, die Wahl des PCs wird abgebrochen. Dadurch wird verhindert, daß ein nicht durch die Systemverwaltung authorisierter Teilnehmer die Kennzifferprozedur mißbraucht.

Wenn ein Eintrag gefunden wird, im Beispiel die zum Teilnehmer 70 gehörende interne Rufnummer 15, so werden alle nachfolgend vom PC gesendeten Ziffern so interpretiert, als kämen sie direkt vom zugeordneten Endgerät mit der Rufnummer 15.

Aus Sicht der Systemsoftware der Telekommunikationsanlage besteht kein Unterschied zur direkten Eingabe von einem herkömmlichen Endgerät aus. Dies ermöglicht es dem PC-Benuzter, alle Leistungsmerkmale und Dienste für das ihm zugeordnete Telefon zu aktivieren, die auch über Kennziffern von einem herkömmlichen Endgerät (Telefon) aktivierbar sind.

Beispiele hierfür wären
- Gesprächsaufbau für das zugeordnete eigene Telefon durchführen
- Anrufumleitung für das eigene Telefon aktivieren
- Anrufschutz für das eigene Telefon aktivieren
- Nachtschaltung für die Telekommunikationsanlage aktivieren
- Codeschloß für das eigene Telefon aktivieren/deaktivieren
- Mitteilungstexte/Abwesenseitstexte aktivieren und deaktivieren
- Direktansprechen einleiten
- Dreierkonferenz
- Makeln
- Parken
- Rückfrage einleiten
- Anklopfen annehmen
- Rückruf aktivieren
- Zeugenzuschaltung aktivieren, etc.,

sofern diese Leistungsmerkmale von der Tefonieapplikation unterstützt werden. Die Applikation benutzt zur Aktivierung solcher Leistungsmerkmale definierte Befehle (z.B. bei TAPI), die von einer Treibersoftware entsprechend an die Telekommunikationsanlage übermittelt werden.

Da alle diese Leistungsmerkmale über eine Ziffernfolge aktiviert werden können, ist es hiermit auch möglich, jede einfache Telefonieapplikation, die z.B. nur mit einem Ziffernfeld und einigen Namenstasten ausgestattet ist, um die Möglichkeit der Aktivierung einiger Leistungsmerkmale zu erweitern. Dies kann mit dieser Methode einfach dadurch geschehen, daß man eine Namenstaste mi dem Namen eines Leistungsmerkmals belegt und als zugehörige Telefonnummer die Kennzahl angibt, die im Normalfall auch von dem zugeordneten Telefon benutzt würde. Da die Wahl einer Rufnummer oder einer Namenstaste über den anwenderspezifischen Treiber als Wahl für einen "Dritten" ausgeführt wird, wird somit das zur Kennziffer gehörende Leistungsmerkmal aktiviert.

Bei kommenden Verbindungen für ein in der Zuordnungstabelle eingetragens Telefon kann gleichzeitig der Ruf auch an den zugeordneten PC gesendet werden, wenn dieser über eine entsprechende Schnittstelle mit der Möglichkeit der Rufnummernübermittlung angeschlossen ist (z.B. ISDN). Dies ermöglicht der Anwendung die Kontrolle der kommenden Rufnummer und z.B. eine entsprechende Recherche in einer Datenbank, um ggf. zu der Rufnummer gehörende Daten direkt während des Rufes anzeigen zu können.

Durch eine leichte Abwandlung der beschriebenen Methoden ist es beispielsweise auch möglich, einem priviligierten Teilnehmer, z.B. einer Vermittlungsstelle, zu erlauben, Leistungsmerkmale für beliebige andere Teilnehmer zu aktivieren, die selbst hierzu nicht in der Lage sind, möglicherweise deshalb, weil sie nicht über einen PC verfügen und das Steuern der Telekommunikationsanlage über die Tasten eines Telefons von ihnen nicht beherrscht wird. Dazu würde nach der Kennziffer für Third-Party-Dienste noch die Teilnehmernummer angegeben, für die das Leistungsmerkmal aktiviert oder eine Wahl durchgeführt werden soll. Die Benutzung dieses Leistungsmerkmals könnte jedoch z.B. nur auf den Vermittlungsplatz beschränkt werden, um unerlaubtes Benutzen und Mißbrauch zu vermeiden.

Auf der Systemseite d.h. auf Seiten der Telekommunikationsanlage ist zur Realisierung der Erfindung lediglich eine neue bzw. veränderte Prozedur erforderlich, und es kann zur Absicherung eine interne Zuordnungstabelle abgelegt werden, die auch für ankommende Rufe benutzt werden kann.

Die Aufgabe der Software auf der PC-Seite würde in diesem Fall darin bestehen, die benötigten TAPI-Befehle geeignet umzusetzen und über das benutzte Transportmedium (z.B. ISDN, V.24, Modem) als Ziffernfolge zu übertragen, wobei jeder Kennziffer die Aktivierungskennziffer für Third-Party-Dienste vorangestellt wird. Systemspezifische, der Applikation unbekannte zusätzliche Leistungsmerkmale werden als einfache Wahlinformationen übertragen und von der Telekommunikationsanlage entsprechend als Dienstaktivierung über den zugeordneten Teilnehmer ausgewertet.

Der auftretende Datenstrom ist aus Sicht der Telekommunikationsanlage bezüglich der Systemperformance im Gegensatz zu z.B. D-Kanal-Meldungen unbedenklich. Ungewollte Eingriffe in das System sind nicht möglich, da die Zuordnung der einzelnen Teilnehmer bei Benutzung der Tabelle nur über die Systemverwaltung zugänglich ist.

## Patentansprüche

1. Verfahren zur Steuerung einer Telekommunikationsanlage mit Hilfe eines an diese Telekommunikationsanlage angeschlossenen Datenverarbeitungssystems, bei dem Eingaben eines Anwenders des Datenverarbeitungssystems durch eine auf dem Datenverarbeitungssystem laufende Software in Steuerbefehle der Telekommunikationsanlage umgesetzt und an die Telekommunikationsanlage gesandt werden, dadurch gekennzeichnet, daß die Eingaben des Anwenders zunächst von einer Anwender-Software in Befehle einer standardisierten Programmierschnittstelle und diese daraufhin mit Hilfe einer für die Telekommunikationsanlage spezifischen Treibersoftware in Steuerbefehle der Telekommunikationsanlage umgesetzt werden.

2. Verfahren nach Anspruch 1, bei dem die Treibersoftware die Telekommunikationsanlage über Kennziffernfolgen steuert.

3. Verfahren nach Anspruch 2, bei dem
- in der Telekommunikationsanlage eine Prozedur implementiert ist, die über eine Kennziffernfolge von einem beliebigen Endgerät aktiviert werden kann,
- nach Eingabe dieser Kennziffernfolge anhand der Rufnummer des aktivierenden Endgerätes in einer internen Zuordnungstabelle der Telekommunikationsanlage nach einem Eintrag für diese Rufnummer gesucht wird und
- der Vorgang abgebrochen wird, falls kein solcher Eintrag in der Tabelle gefunden wird.

4. Verfahren nach Anspruch 3, bei dem die Zuordnungstabelle einem eingetragenen ersten Endgerät eine interne Rufnummer zuordnet und alle nachfolgenden von diesem ersten Endgerät gesendeten Ziffern so interpretiert werden, als kämen sie direkt von einem zweiten Endgerät mit dieser internen Rufnummer.

5. Verfahren nach Anspruch 4, bei dem das erste Endgerät ein Datenverarbeitungssystem ist, bei dem Eingaben eines Anwenders des Datenverarbeitungssystems durch eine auf dem Datenverarbeitungssystem laufende Software in Steuerbefehle der Telekommunikationsanlage umgesetzt und an die Telekommunikationsanlage gesandt werden, und bei dem das zweite Endgerät ein Telefon dieses Anwender ist.

6. Verfahren nach einem der vorhergehenden Ansprüche, bei dem die auf dem Datenverarbeitungssystem laufende Software eine Benutzeroberfläche besitzt, bei der vom Anwender programmierbare Funktions- oder Namenstasten vorgesehen sind, von denen wenigstens eine mit dem Namen eines Leistungsmerkmals der Telekommunikationsanlage belegt ist, und deren zugehörige Nummernfolge mit einer Kennziffernfolge zur Steuerung der Telekommunikationsanlage belegt ist.
